# EUROPEAN PATENT SPECIFICATION

(11) **EP 0 476 945 B1**
(45) Date of publication and mention of the grant of the patent: **08.02.1995**
(21) Application number: 91308415.8
(22) Date of filing: 16.09.1991
(51) Int. Cl.: H02G 3/22

(54) **Fire seals**
Feuerfeste Abdichtungen
Etanchements coupe-feu

(30) Priority: 15.09.1990 GB 9020192
(43) Date of publication of application: 25.03.1992
(73) Proprietor: ENVIRONMENTAL SEALS LIMITED, Dover, Kent, CT15 5HR (GB)
(72) Inventor: Ward, Derek Alfred, Dover, Kent CT15 5HR (GB)
(74) Representative: Fry, Alan Valentine

(56) References cited:
- EP-A- 0 271 248
- GB-A- 2 181 093
- GB-A- 2 222 916

## Description

This invention relates to fire proofed conduits and fittings therefore for electrical cabling.

Electrical services which pass through fire walls or ceilings present potential fire hazards should PVC sleeved electrical cables be subjected to excessive heat caused by, for example, a fire occurring in a room or ceiling area through which the electrical services pass. Overheating of metal conduits through which electric cables pass can cause self ignition of the cables; also conduit fittings subjected to excessive heat can rapidly deform thereby enabling high temperature gases and flames to reach the cables to cause fires to occur.

Document GB-A-2 222 916 discloses a fire-proofed lead-through conduit for cables which includes a steel tube, to whose internal surface is applied a thin layer of intumescent material and whose ends are closed with mineral wool plugs. A typical thickness of the intumescent layer is between 0.5 and 2 mm. GB-A-2 181 093 discloses a compressible laminate for use in forming a fire seal in a building cavity, which comprises a fire retardant material such as open-cell foam and one or more layers of a preferably encapsulated intumescent material comprising graphite and vermiculite. The laminate is intended fully to fill the cavity and is porous to permit the passage of air in the plane of the laminate.

The present invention sets out to provide a fire proofed conduit and fittings therefrom for electrical cabling which overcome, or at least alleviate, the disadvantages referred to above.

According to the present invention there is provided a fire proofed conduit and conduit fitting for electrical cabling to at least one internal wall of which is adhered a fibrous pad coated on at least one of its surfaces with an intumescent material, the thickness of the pad being between 1.5 and 5.0mm.

Preferably, the thickness of the pad is between 1.8 and 4.0mm thickness. The pad may be secured to one or more internal walls of the conduit by PVC faced adhesive tape. Preferably, the intumescent material includes a high proportion of graphite to prevent electrical shorting should one or more conducting wires of the cable become exposed.

One intumescent material in accordance with the invention comprises a pad of vermiculite and graphite fibres which is coated on one or both sides with an intumescent paint or varnish, the intumescent paint or varnish impregnating itself into the fibrous structure of the pad to define a surface which expands in the presence of fire.

The intumescent material may comprise an intumescent paint.

A further intumescent material in accordance with the invention comprises a pad produced from ceramic fibres coated on one side with vermiculite granules. The pad is then coated with an intumescent paint or varnish of the type referred to above, the intumescent material impregnating into the porous structure of the pad.

Typical conduit fittings include metallic trunking and busbar chambers.

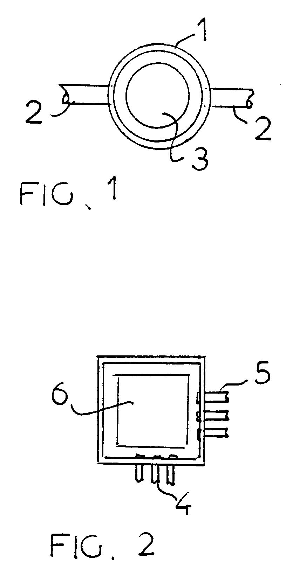

The invention will now be described by way of example only with reference to the accompanying diagrammatic drawings in which Figures 1 and 2 are plan views of electrical conduit boxes in accordance with the invention.

The conduit box illustrated in Figure 1 is a Besa (British Engineering Standards Association) box of circular construction and includes a central bowl 1 and conduit entry and exit ports 2. Positioned within the base of the conduit box a pad 3 of intumescent material.

The conduit box illustrated in Figure 2 is of square construction and includes three entry ports 4 and three exit ports 5. As for the embodiment illustrated in Figure 1, a suitably shaped pad 6 of intumescent material is positioned within the base of the square section of the box.

In each case, the pad comprises a backing sheet produced from a mixture of vermiculite and graphite fibres and is coated on one or both sides with intumescent paint known as Pyroplas C which, on drying, produces a surface which can flex. The pad or gasket may firstly be sprayed with a solution of UPVC adhesive to assist retention of the intumescent paint within the fibres of the material. The intumescent paint impregnates itself into the fibrous structure of the pad to define a surface which expands on being exposed to fire to provide a seal between the respective inlet and outlet ports of the conduit box.

Alternatively, the pad comprises a backing sheet produced from ceramic fibres coated on one side with vermiculite granules. The sheet is then coated with an intumescent paint or varnish (typically Pyroplas C) which impregnates into the porous structure of the sheet.

The thickness of the pad or gasket is between 1.5 and 5.0mm to facilitate easy access to the box interior. More especially, the thickness may be of the order of between 1.8 and 4.0mm. The pad can be attached to the interior of the conduit box by means of, for example, double sided tape. The pad is preferably covered with a PVC tape to give smooth edges and facing for PVC sleeved cables to pass over. Because of the presence of graphite within the material, shorting of any exposed cables is avoided.

Upon a fire occurring, the intumescent content of the pad is activated and expands to seal the interior of the conduit box and to prevent self ignition of the cable and/or spreading of the fire and/or toxic gases from one area to another.

It will be appreciated that the fire barriers described above are merely exemplary of barriers in accordance with the invention and that modifications can readily be made thereto without departing from the true scope of the invention as set out in the appended claims.

## Claims

1. A fire proofed conduit and fitting for electrical cabling to at least one internal wall of which is adhered a fibrous pad coated on at least one of its surfaces with an intumescent material, the thickness of the pad being between 1.5 and 5.0mm.

2. A conduit and fitting as claimed in Claim 1 wherein the thickness of the pad is between 1.8 and 4.0mm.

3. A conduit and fitting as claimed in Claim 1 or Claim 2 wherein the pad is adhered to the at least one internal wall of the conduit by PVC faced adhesive tape.

4. A conduit and fitting as claimed in any one of Claims 1 to 3 wherein the intumescent material includes a high proportion of graphite.

5. A conduit and fitting as claimed in any one of claims 1 to 3 wherein the pad comprises vermiculite and graphite fibres coated on one or both sides with an intumescent paint or varnish.

6. A conduit and fitting as claimed in any one of Claims 1 to 3 wherein the pad comprises ceramic fibres coated on one side with layers of vermiculite granules and intumescent paint or varnish.

## Patentansprüche

1. Feuerbeständiger Kabelkanal und Verbindungsstück für elektrische Kabel, bei dem an mindestens einer Innenwand eine an mindestens einer ihrer Oberflächen mit einem anschwellenden Material beschichtete Faserstoffmatte haftet, deren Dicke zwischen 1,5 und 5,0 mm beträgt.

2. Kabelkanal und Verbindungsstück gemäß Anspruch 1, wobei die Dicke der Matte zwischen 1,8 mm und 4,0 mm beträgt.

3. Kabelkanal und Verbindungsstück gemäß Anspruch 1 oder 2, wobei die Matte von PVC-beschichtetem Klebeband an der mindestens einen Innenwand des Kabelkanals gehalten wird.

4. Kabelkanal und Verbindungsstück nach einem der Ansprüche 1 bis 3, wobei das anschwellende Material einen hohen Graphitanteil enthält.

5. Kabelkanal und Verbindungsstück gemäß einem der Ansprüche 1 bis 3, wobei die Matte auf einer oder auf beiden Seiten mit einem anschwellenden Anstrich oder Lack beschichtete Vermiculit- und Graphitfasern umfaßt.

6. Kabelkanal und Verbindungsstück gemäß einem der Ansprüche 1 bis 3, wobei die Matte auf einer Seite mit Schichten von Vermiculitgranulat und anschwellendem Anstrich oder Lack beschichtete Keramikfasern umfaßt.

## Revendications

1. Un conduit et un montage ignifugés pour câblage électrique, comportant sur l'une au moins des parois internes un patin fibreux fixé par adhésif, patin qui, sur l'une au moins de ses surfaces, est revêtu d'un matériau intumescent, l'épaisseur du patin variant entre 1,5 et 5 mm.

2. Un conduit et un montage, selon les stipulations de la revendication 1, dans lesquels l'épaisseur du patin se situe entre 1,8 et 4 mm.

3. Un conduit et un montage, selon les stipulations de la revendication 1 ou de la revendication 2, dans lesquels le patin est fixé sur l'une au moins des parois internes du conduit par un ruban adhésif à garnissage PVC.

4. Un conduit et un montage, selon les stipulations de l'une quelconque des revendications 1 à 3, dans lesquels le matériau intumescent inclut une forte proportion de graphite.

5. Un conduit et un montage, selon les stipulations de l'une quelconque des revendications 1 à 3, dans lesquelles le patin comporte des fibres en vermiculite et en graphite enduites d'un côté, ou des deux côtés, d'une peinture ou d'un vernis intumescent.

6. Un conduit et un montage, selon les stipulations de l'une quelconque des revendications 1 à 3, dans lesquels le patin comporte des fibres céramique enduites d'un côté de couches de granules en vermiculite et d'une peinture ou d'un vernis intumescent.
